# EUROPÄISCHE PATENTSCHRIFT

(11) **EP 2 995 232 B1**
(45) Veröffentlichungstag und Bekanntmachung des Hinweises auf die Patenterteilung: **08.11.2017**
(21) Anmeldenummer: 15002602.9
(22) Anmeldetag: 04.09.2015
(51) Int. Cl.: A47K 3/40, E03F 5/04, E03C 1/20

(54) **AUFNAHMEELEMENT ZUM EINSETZEN IN EINE ABLAUFÖFFNUNG EINER DUSCHBODENPLATTE UND DUSCHBODENPLATTEN-MODUL**
HOLDER ELEMENT FOR INSERTION INTO AN OUTLET OPENING OF A SHOWER TRAY PANEL AND SHOWER TRAY PANEL MODULE
ÉLEMENT DE RECEPTION DESTINE A S'INSERER DANS UN ORIFICE D'EVACUATION D'UNE PLAQUE DE SOL DE DOUCHE ET MODULE DE PLAQUE DE SOL DE DOUCHE

(30) Priorität: 11.09.2014 DE 102014113096
(43) Veröffentlichungstag der Anmeldung: 16.03.2016
(73) Patentinhaber: wedi GmbH, 48282 Emsdetten (DE)
(72) Erfinder: Wedi, Stephan, 48282 Emsdetten (DE)
(74) Vertreter: Träger, Denis

(56) Entgegenhaltungen:
- WO-A1-2008/009874
- DE-A1-102004 036 652

## Beschreibung

Die Erfindung betrifft ein Aufnahmeelement für ein Brausetassen-Schraubventil, zum Einsetzen in eine durchgehende Ablauföffnung einer Duschbodenplatte, welche eine erste, ebene oder konkave Flachseite und eine zweite, der ersten abgewandte Flachseite aufweist, umfassend:
- einen Ringkorpus, welcher von der ersten Flachseite in die Ablauföffnung der Duschbodenplatte einlegbar ist und welcher sich mit seinem Auflagekragen an der ersten Flachseite der Duschbodenplatte abstützt, wobei der Auflagekragen in eine geneigte profilierte Wand des Ringkorpusses übergeht und wobei die geneigte Wand in eine zylindrische Innenwand ausläuft,
- und einen Stützflansch, welcher von der zweiten Flachseite der Duschbodenplatte in derer Ablauföffnung einlegbar ist und welcher mit seinem Auflagekragen an der zweiten Flachseite der Duschbodenplatte aufliegt.
Ferner betrifft die Erfindung einen Duschbodenplatten-Modul, bestehend aus der Duschbodenplatte und dort eingebautem Aufnahmeelement.
Aus DE 10 2004 036 652 A1 ist ein Duschbodenelement bekannt, das ein Aufnahmeelement für ein Brausetassen-Schraubventil zum Einsetzen in eine durchgehende Ablauföffnung einer Duschbodenplatte aufweist. Das Aufnahmeelement umfasst ein als Einlegeteil 22 ausgebildetes Ablauf-Oberteil 3, das von der einen Seite in die Duschbodenplatte eingesetzt wird sowie ein Hartteil 7, das von der anderen Seite eingesetzt wird. Die Abstützung zwischen dem Einlegeteil 22 und dem Hartteil 7 erfolgt über eine Verklebung oder alternativ über weitere Ablaufteile, die miteinander verschraubt werden und dabei Einlegeteil 22 und Hartteil 7 gegeneinander verspannen. Unabhängig davon, welche Verbindungsart gewählt wird, müssen Einlegeteil 22 und Hartteil 7 zunächst gegenüber der Duschbodenplatte positioniert werden. Im Anschluss daran wird diese Position durch Aushärten des ggf. eingesetzten Klebers bzw. durch Schraubmontage der weiteren Ablaufteile fixiert.

Weiterhin bekannt ist ein zweiteiliges Aufnahmeelement der eingangs genannten Art sowie ein Duschbodenplatten-Modul, die von der Anmelderin unter der Produktbezeichnung "wedi Fundo Ablauf senkrecht" (zweiteiliges Aufnahmeelement) und "wedi Fundo" (Duschbodenplatten-Modul) hergestellt werden und im Markt erhältlich sind. Die genannten Produkte haben sich auf dem deutschen und auf den ausländischen Märkten sehr gut bewährt, jedoch besteht Bedarf an deren Weiterentwicklung zwecks Verbesserung der Konstruktion und Bereicherung des Firmenangebotes.

Aufgabe der Erfindung ist es daher, ein zweiteiliges Aufnahmeelement vorzuschlagen, das auf einfache Art und Weise in der gewünschten Positionierung an der Duschbodenplatte anbringbar ist und dort sicher gehalten wird.

Diese Aufgabe ist durch ein zweiteiliges Aufnahmeelement mit den Merkmalen des Anspruches 1 gelöst. Die Aufgabe ist weiterhin gelöst, durch ein Duschbodenplatten-Modul mit den Merkmalen des Anspruches 2.

Das zweiteilige Aufnahmeelement umfasst einen Ringkorpus und einen Stützflansch, wobei
- die Wand des Ringkorpusses wenigstens eine umlaufende Rippe aufweist, welche senkrecht oder geringfügig geneigt zum Auflagekragen des Ringkorpusses angeordnet ist,
- der Stützflansch ebenso wenigstens eine umlaufende Rippe aufweist, welche im Wesentlichen senkrecht zum Auflagekragen des Stützflansches gerichtet ist,
wobei die Rippen des Ringkorpusses und die Rippen des Stützflansches im zusammengefügten Zustand aufeinander gerichtet sind, und wobei wenigstens eine der Rippen des Ringkorpusses mit wenigstens einer Rippe des Stützflansches im zusammengefügten Zustand sich wenigstens teilweise miteinander verzahnen.

Bei der Verzahnung handelt es sich um eine gegenseitige Anordnung der umlaufenden Rippen, die miteinander wenigstens teilweise verklemmt sind oder miteinander kontaktieren. Die Rippe des Ringkorpusses kann auch kontaktfrei zwischen zwei Rippen des Stützflansches, oder umgekehrt, die Rippe des Stützflansches kann zwischen den Rippen des Ringkorpusses angeordnet sein.
Auf diese Weise können die Rippen des Ringkorpusses und die Rippen des Stützflansches im zusammengefügten Zustand miteinander kraftschlüssig verbunden sein, wobei wenigstens eine Rippe elastisch verformbar ist. Dabei kann die zylindrische Innenwand des Ringkorpusses ebenso zu einer Rippe fungieren.

Das zweiteilige Aufnahmeelement kann über eine, nicht beanspruchte, kombinierte Verbindung, beispielsweise über eine Klemm- und Klebeverbindung in der Öffnung der Duschbodenplatte festgelegt sein.
Es kann auch eine stoffflüssige Verbindung des Ringkorpusses und/oder des Stützflansches mit der Duschbodenplatte, beispielsweise mittels einer Klebeschicht, vorgesehen sein. Die Klebeverbindung gewährleistet eine gleichmäßige Spannungsverteilung und Kraftübertragung über die gesamte Klebfläche und kann größeren statischen und dynamischen Belastungen standhalten. Überdies kann die Klebeverbindung eine bei den Duschbodenplatten-Modulen gewünschte, dichtende Funktion übernehmen.
Wenigstens eine der Rippen des Ringkorpusses und/oder des Stützflansches kann segmentiert sein. Segmentierung bedeutet, dass die Rippe an ihrem Umfang wenigstens zwei in gleichen oder ungleichen Abständen voneinander liegende Unterbrechungen aufweist, welche die Rippe in zwei oder mehrere Spreizelemente teilt. Hierdurch lässt sich der Kraftangriff bei der Montage gleichmäßig verteilen und die Rippe reagiert nachgiebiger auf elastische Verformung.
Die beschriebene Rippenanordnung ermöglicht ein manuelles, maschinelles bzw. roboterunterstütztes Zusammenfügen der beiden Teile, d. h. des Ringkorpusses und des Stützflansches zu einer in die vorgefertigte Duschbodenplatte eingebauten Einheit. Dementsprechend beansprucht die vorliegende Erfindung auch einen Duschbodenplatten-Modul, welcher sich aus der vorgefertigten Duschbodenplatte und dem in die Duschbodenplatte eingebauten zweiteiligen Aufnahmeelement zusammensetzt. Der Duschbodenplatten-Modul kann in dieser Form konfektioniert und angeboten werden.
Die Duschbodenplatte kann aus Vollkunststoff, faserverstärktem Kunststoff, wie Kunstharz, oder aus einem beidseitig mit Verstärkungsschicht belegten Rohschaumkörper bestehen.
Die Duschbodenplatte kann - in Draufsicht auf ihre Flachseite - polygonal, insbesondere rechteckig oder rund, beispielsweise kreisrund, oval, kreissegment-, nieren- oder schneckenförmig sein.
Als Material zur Herstellung des Ringkorpusses und des Stützflansches können Thermoplaste, wie PE-HD oder Polycarbonat, Duroplaste oder Metalle vorgesehen sein.
Weitere Merkmale und Vorteile der Erfindung sind in mehreren Ausführungsbeispielen anhand der Zeichnung erläutert. Die Figuren zeigen:
- Fig. 1: eine Duschbodenplatte vor dem Einmontieren des Aufnahmeelementes, in einem vereinfachten, schematischen Schnitt;
- Fig. 2: einen Ringkorpus in einer perspektivischen Ansicht,
- Fig. 3: einen Stützflansch in einer perspektivischen Ansicht,
- Fig. 4: einen Duschbodenplatten-Modul, bestehend aus der Duschbodenplatte gemäß Fig. 1 und eingebautem Aufnahmeelement, in einem Schnitt;
- Fig. 5: eine perspektivische Ansicht des Duschbodenplatten-Moduls gemäß Fig. 4;
- Fig. 6: das Duschbodenplatten-Modul gemäß Fig. 4, mit nicht beanspruchter angedeuteter Klebefüllung, in einem Schnitt und
- Figuren 7 und 8: andere nicht beanspruchte Ausführungsbeispiele des Duschplatten-Moduls, jeweils in einem Schnitt.

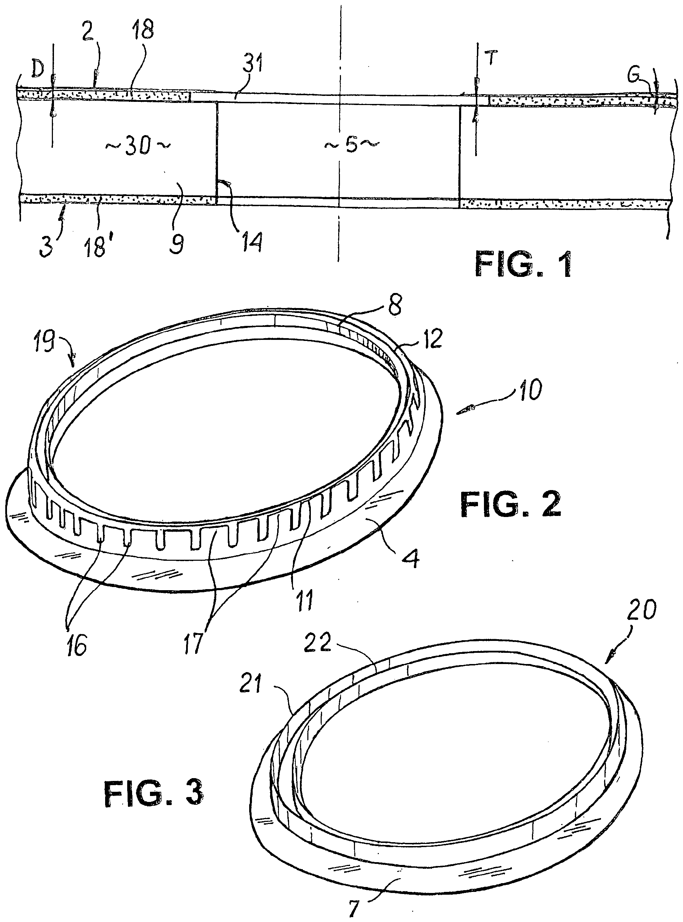

Die Fig. 1 zeigt eine Duschbodenplatte 9, umfassend einen Rohschaumkörper 30 aus HFCKW-freiem, wasserundurchlässigem und wärmedämmendem, extrudiertem Polystyrol-Hartschaum, welcher beidseitig mit einer armierten Kunstmörtelschicht 18, 18' (kunststoffmodifizierter Beschichtungsmörtel) dauerhaft und nicht zerstörungsfrei ablösbar verklebt ist. Die Duschbodenplatte 9 weist eine leicht konkave, einer kreisrunden Ablauföffnung 5 zulaufende, obere Flachseite 2 und eine plane, untere Flachseite 3 auf. Die Ablauföffnung 5 weist eine zylindrische Innenfläche 14 auf. Weiterhin ist in Fig. 1 eine ringförmige Flachausnehmung 31 zu sehen, deren Tiefe T einem Dickenmaß D der Kunstmörtelschicht 18 entspricht oder diese überschreitet. Mit Bezugszeichen "G" ist ein Gefälle angedeutet. Die einmontierte Duschbodenplatte 9 wird noch verfliest.

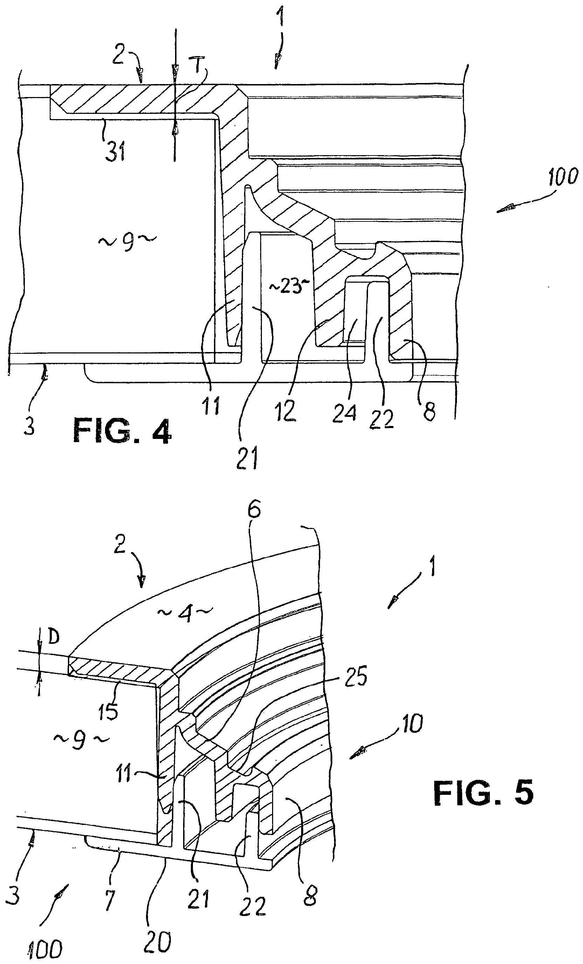

Die Begriffe: "obere", "untere", "oben", "unten", "oberhalb" etc. beziehen sich auf die übliche Anordnung der Bodenplatte in einer Duschzelle, wie es beispielsweise den Figuren 4 und 5 zu entnehmen ist.

Ein in Figuren 2, 4 und 5 dargestellter, aus einem Materialstück gefertigter Ringkorpus 10 weist einen Auflagekragen 4, eine geneigte, profilierte Wand 6, welche in eine zylindrische, nach unten gerichtete Innenwand 8 ausläuft und zwei umlaufende, ebenso nach unten zeigende Rippen 11, 12 auf, wobei die Rippe 11 als äußere und die Rippe 12 als mittlere bezeichnet werden kann. Die mittlere Rippe 12 ist zwischen der Innenwand 8 und der äußeren Rippe 11 koaxial angeordnet. Zwischen den Rippen 11, 12 und der Innenwand 8 sind umlaufende, ringförmige Räume 23, 24 zu sehen. Ferner weist die profilierte Wand 6 eine umlaufende Nut 25 zur Aufnahme eines nicht dargestellten, elastomeren Dichtelementes auf.

In einer vorteilhaften Ausführung weist die äußere Rippe 11 mehrere an ihrem Umfang 19 eingebrachte, etwa U-förmige Unterbrechungen 16 auf, welche die Rippe in elastisch verformbare Spreizelemente 17 teilt.

Der Fig. 3 ist ein ringförmiger Stützflansch 20 zu entnehmen, welcher einen Auflagekragen 7 und zwei nach oben ragende Rippen 21, 22 aufweist, welche so dimensioniert sind, dass sie im zusammengefügten Zustand in die vorgenannten Räume 23, 24 (vgl. Figuren 4 und 5) eingreifen.

Die Figuren 4 und 5 zeigen ein aus dem Ringkorpus 10 und dem Stützflansch 20 zusammengesetztes, in der Ablauföffnung 5 platziertes Aufnahmeelement 100. Der Ringkorpus 10 stützt sich mit seinem Auflagekragen 4 an der Flachausnehmung 31, mit der Flachseite 2 der Duschbodenplatte 9 vorzugsweise in Flucht liegend, ab und ist dort mit dem Rohschaumkörper 30 verklebt. Nicht ausgeschlossen ist jedoch, dass die Oberseite des Auflagekragen 4 versetzt zur Flachseite 2 der Duschbodenplatte 9 angeordnet ist, so dass zwischen der Flachseite 2 und der Oberseite des Auflagekragens ein Höhenversatz besteht. Die Dicke des Auflagekragens 4 unterschreitet jedoch die Tiefe T der Flachausnehmung 31. Weiterhin kann die Tiefe T so konzipiert sein, dass sie einen Freiraum für einen geringfügigen Klebespalt 15 umfasst, welcher beispielsweise 0,5 mm groß ist. Als Klebstoff ist im vorliegenden Fall eine Heißklebeschmelze (hotmelt) eingesetzt. Alternativ zu einem Heißkleber kommen auch andere Kleber in Betracht.
Beim Zusammenpressen der beiden Teile des Aufnahmeelementes 100 gibt die segmentierte Rippe 11 infolge der von der nach oben gerichteten Rippe 21 ausgeübten Druckkraft etwas nach und drückt gegen die Innenfläche 14 der Ablauföffnung 5 (vgl. Fig. 5). Die Rippe 22 des Stützflansches 20 kommt mit der nach unten zeigenden Innenwand 8 des Ringkorpusses 10 In flächigen Kontakt bzw. drückt gegen sie. Dabei liegt der untere Auflagekragen 7 auf der Unterseite (Flachseite 3) der Duschbodenplatte 9 dicht auf. Eine fluchtende Anordnung des unteren Auflagekragens 7 und der Flachseite 3 ist ebenso möglich.

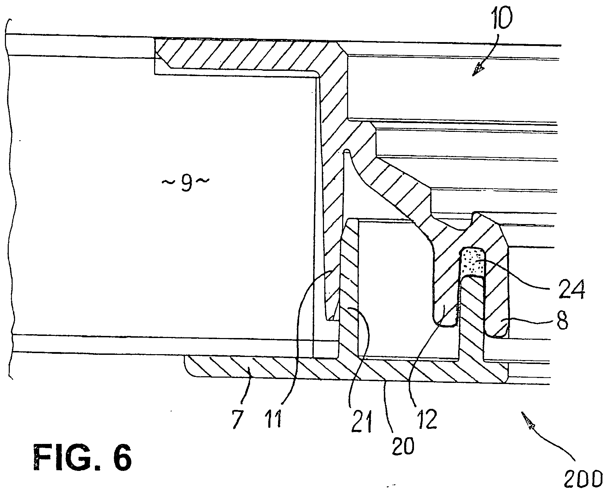

Ein ähnliches nicht beanspruchtes Aufnahmeelement (Bezugszahl 200) ist in Fig. 6 dargestellt. Gleiche Bezugszeichen bezeichnen die gleichen Teile. Der Unterschied zwischen den Aufnahmeelementen 100 und 200 ist der, dass der Raum 24 zwischen der Innenwand 8 und der Rippe 12 des Ringkorpusses 10 enger ausfällt, so dass er sich mit einem flüssigen Klebstoff oder geeignetem Dichtmaterial ausfüllen lässt.

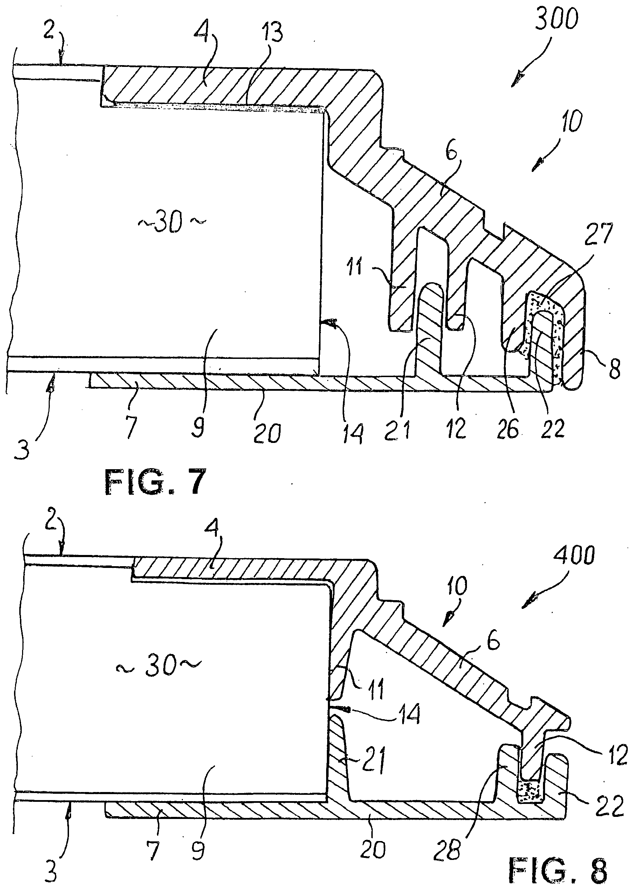

Ein anderes, nicht beanspruchtes gemäß Fig. 7 ausgeführtes, Aufnahmeelement 300 zeichnet sich durch eine andere Rippenanordnung aus. Am Ringkorpus 10 sind statt zwei drei nach unten zeigenden Rippen 11, 12, 26 angeordnet, wobei die äußere Rippe 11 weit von der Innenfläche 14 (im einmontierten Zustand) der Ablauföffnung liegt. Die Rippe 21 des Stützflansches 20 greift zwischen die nach unten gerichteten Rippen 11, 12 ein und wird dort durch Reibungskraft eingeklemmt. Die zweite Rippe (Bezugszahl 22) des Stützflansches 20 greift in einen, mit einem flüssigen Klebstoff oder geeignetem Dichtmaterial gefüllten Raum 27 ein, welcher durch die Innenwand 8 und die Rippe 26 begrenzt ist. In dem Klebespalt 15 unter dem Auflagekragen 4 kann z.B. auch eine ringförmig verlegte Doppelklebefolle 13 platziert werden.

In Fig. 8 ist ein nicht beanspruchtes Aufnahmeelement 400 dargestellt, dessen Ringkorpus 10 zwei nach unten gerichtete Rippen 11 und 12, dagegen der Stützflansch 20 drei Rippen 21, 22 und 28 aufweist. Die Rippen 22 und 28 des Stützflansches 20 sind mit einem flüssigen Klebstoff oder geeignetem Dichtmaterial gefüllt, in welche die Rippe 12 des Ringkorpusses 10 im zusammengesetzten Zustand eingreift, so dass dort eine entsprechende Verbindung zustande kommt. Die äußeren Rippen 11 und 21 sind aufeinander gerichtet und liegen auf der Innenfläche 14 der Ablauföffnung 5 auf. Die beiden äußeren Rippen 11 und 21 können segmentiert sein.

Die Duschbodenplatte 9 bildet zusammen mit dem eingesetzten Aufnahmeelement 100; 200, 300; 400 einen Duschplatten-Modul 1

## Patentansprüche

1. Aufnahmeelement (100) für ein Brausetassen-Schraubventil, zum Einsetzen in eine durchgehende Ablauföffnung (5) einer Duschbodenplatte (9), welche eine erste, ebene oder konkave Flachseite (2; 3) und eine zweite, der ersten abgewandte Flachseite (3; 2) aufweist, umfassend:
- einen Ringkorpus (10), welcher von der ersten Flachseite (2; 3) in die Ablauföffnung (5) der Duschbodenplatte (9) einlegbar ist und welcher sich mit seinem Auflagekragen (4) an der ersten Flachseite (2; 3) der Duschbodenplatte (9) abstützt, wobei der Auflagekragen (4) in eine geneigte Wand (6) des Ringkorpusses (10) übergeht und wobei der Ringkorpus (10) wenigstens eine umlaufende Rippe (11, 12, 26) aufweist, welche senkrecht oder geringfügig geneigt zum Auflagekragen (4) des Ringkorpusses (10) angeordnet ist,
- und einen Stützflansch (20), welcher von der zweiten Flachseite (3; 2) der Duschbodenplatte (9) in derer Ablauföffnung (5) einlegbar ist und welcher mit seinem Auflagekragen (7) an der zweiten Flachseite (3; 2) der Duschbodenplatte (9) aufliegt, und wobei der Stützflansch (20) ebenso wenigstens eine umlaufende Rippe (21, 22, 28) aufweist, welche im Wesentlichen senkrecht zum Auflagekragen (7) des Stützflansches (20) gerichtet ist,
wobei die Rippen (11, 12, 26) des Ringkorpusses (10) und die Rippen (21, 22, 28) des Stützflansches (20) im zusammengefügten Zustand aufeinander gerichtet sind, und wobei wenigstens eine der Rippen (11, 12, 26) des Ringkorpusses (10) mit wenigstens einer Rippe (21, 22, 28) des Stützflansches (20) im zusammengefügten Zustand sich wenigstens teilweise miteinander verzahnen,
**dadurch gekennzeichnet, dass**
- die geneigte Wand (6) wenigstens eine umlaufende Rippe (11, 12, 26) aufweist und eine Profilierung aufweist und in eine zylindrische Innenwand (8) ausläuft,
- die Rippen (11, 12, 26) des Ringkorpusses (10) und die Rippen (21, 22, 28) des Stützflansches (20) im zusammengefügten Zustand kraftschlüssig miteinander verbunden sind,
- wenigstens eine Rippe (11) des Ringkorpusses (10) oder (21) des Stützflansches (20) an Ihrem Umfang (19) segmentiert ist,
so dass beim Zusammenpressen der beiden Teile des Aufnahmeelementes (100) die segmentierte Rippe (11) infolge einer von der Rippe (21) ausgeübten Druckkraft etwas nachgibt um gegen eine Innenfläche (14) der Ablauföffnung (5) drücken zu können.

2. Duschbodenplatten-Modul (1), umfassend eine vorgefertigte Duschbodenplatte (9) und ein in die Duschbodenplatte (9) eingebautes Aufnahmeelement (100) gemäß Anspruch 1.

3. Duschbodenplatten-Modul (1) nach Anspruch 2, **dadurch gekennzeichnet, dass**
- auf der ebenen oder konkaven Flachseite (2; 3) der Duschbodenplatte (9) im Bereich der Ablauföffnung (5) eine ringförmige, in das Material eines Rohschaumkörpers (30) der Duschbodenplatte (9) hineinreichende Flachausnehmung (31) eingearbeitet ist;
- der Auflagekragen (4) sich am Rohschaumkörper (30) im Bereich der Flachausnehmung (31) abstützt und mit der Flachseite (2; 3) der Duschbodenplatte (9) in Flucht liegt.

4. Duschbodenplatten-Modul (1) nach Anspruch 2, **dadurch gekennzeichnet, dass** die Rippe (11) des Ringkorpusses (10) im zusammengefügten Zustand zwischen der Rippe (21) des Stützflansches (20) und einer Innenfläche (14) der Ablauföffnung (5) der Duschbodenplatte (9) eingeklemmt ist.

5. Duschbodenplatten-Modul (1) nach Anspruch 2, **dadurch gekennzeichnet, dass** die Rippe (11) des Ringkorpusses (10) und die Rippe (21) des Stützflansches (20) im zusammengefügten Zustand beide gegen eine Innenfläche (14) der Ablauföffnung (5) der Duschbodenplatte (9), übereinander liegend, drücken.

6. Duschbodenplatten-Modul (1) nach einem der Ansprüche 2 bis 5, **dadurch gekennzeichnet, dass** der Auflagekragen (4) mit dem Rohschaumkörper (30) im Bereich der Flachausnehmung (31) verklebt ist.

7. Duschbodenplatten-Modul (1) nach Anspruch 6, **dadurch gekennzeichnet, dass** der Auflagekragen (4) über eine ringförmig verlegte Doppelklebefolie (13) mit dem Rohschaumkörper (30) verbunden ist.

## Claims

1. Receiving element (100) for a screw-type shower tray valve, for insertion into a continuous outlet opening (5) of a shower floor panel (9), which has a first plane or concave flat side (2; 3) and a second flat side (3; 2) directed away from the first one, comprising:
- an annular body (10) which can be inserted from the first flat side (2; 3) into the outlet opening (5) of the shower floor panel (9) and which bears with its bearing collar (4) on the first flat side (2; 3) of the shower floor panel (9), wherein the bearing collar (4) merges into an inclined wall (6) of the annular body (10) and wherein the annular body (10) has at least one circumferential rib (11, 12, 26), which is arranged vertically or at a slight inclination to the bearing collar (4) of the annular body (10),
- and a support flange (20) which can be inserted from the second flat side (3; 2) of the shower floor panel (9) into the outlet opening (5) thereof and which bears with its bearing collar (7) on the second flat side (3; 2) of the shower floor panel (9), and wherein the support flange (20) likewise has at least one circumferential rib (21, 22, 28) which is directed substantially perpendicular to the bearing collar (7) of the support flange (20),
wherein the ribs (11, 12, 26) of the annular body (10) and the ribs (21, 22, 28) of the support flange (20) are directed toward each other in the assembled state, and wherein at least one of the ribs (11, 12, 26) of the annular body (10) at least partially meshes with at least one rib (21, 22, 28) of the support flange (20) in the assembled state,
**characterized in that**
- the inclined wall (6) has at least one circumferential rib (11, 12, 26) and a profile and runs out into a cylindrical inner wall (8),
- the ribs (11, 12, 26) of the annular body (10) and the ribs (21, 22, 28) of the support flange (20), in the assembled state, are connected to each other with a force fit,
- at least one rib (11) of the annular body (10) or (21) of the support flange (20) is segmented on its periphery (19),
with the result that when the two parts of the receiving element (100) are pressed together, the segmented rib (11) yields slightly on account of the pressure force exerted by the rib (21) in order to be able to press against an inner face (14) of the outlet opening (5).

2. Shower floor panel module (1) comprising a prefabricated shower floor panel (9) and a receiving element (100) as per Claim 1 built into the shower floor panel (9).

3. Shower floor panel module (1) according to Claim 2, **characterized in that**
- in the area of the outlet opening (5), a ring-shaped shallow recess (31) that extends into the material of a raw foam body (30) of the shower floor panel (9) is worked into the plane or concave flat side (2; 3) of the shower floor panel (9);
- the bearing collar (4) bears on the raw foam body (30) in the area of the shallow recess (31) and lies flush with the flat side (2; 3) of the shower floor panel (9).

4. Shower floor panel module (1) according to Claim 2, **characterized in that** the rib (11) of the annular body (10) is clamped, in the assembled state, between the rib (21) of the support flange (20) and an inner face (14) of the outlet opening (5) of the shower floor panel (9).

5. Shower floor panel module (1) according to Claim 2, **characterized in that** the rib (11) of the annular body (10) and the rib (21) of the support flange (20), lying one above the other, both press against an inner face (14) of the outlet opening (5) of the shower floor panel (9) in the assembled state.

6. Shower floor panel module (1) according to one of Claims 2 to 5, **characterized in that** the bearing collar (4) is adhesively bonded to the raw foam body (30) in the area of the shallow recess (31).

7. Shower floor panel module (1) according to Claim 6, **characterized in that** the bearing collar (4) is connected to the raw foam body (30) via a double-sided adhesive film (13) applied in a circular shape.

## Revendications

1. Elément de réception (100) pour une vanne filetée de bac de douche, pour l'insertion dans une ouverture d'écoulement traversante (5) d'une plaque de sol de douche (9) qui présente un premier côté plat plan ou concave (2 ; 3) et un deuxième côté plat (3 ; 2) opposé au premier, comprenant :
- un corps annulaire (10) qui peut être inséré depuis le premier côté plat (2 ; 3) dans l'ouverture d'écoulement (5) de la plaque de sol de douche (9) et qui s'appuie avec son rebord d'appui (4) contre le premier côté plat (2 ; 3) de la plaque de sol de douche (9), le rebord d'appui (4) se prolongeant par une paroi inclinée (6) du corps annulaire (10) et le corps annulaire (10) présentant au moins une nervure périphérique (11, 12, 26) qui est disposée perpendiculairement ou de manière légèrement inclinée par rapport au rebord d'appui (4) du corps annulaire (10),
- et une bride de support (20) qui peut être insérée depuis le deuxième côté plat (3 ; 2) de la plaque de sol de douche (9) dans son ouverture d'écoulement (5) et s'applique avec son rebord d'appui (7) contre le deuxième côté plat (3 ; 2) de la plaque de sol de douche (9), et la bride de support (20) présentant également au moins une nervure périphérique (21, 22, 28) qui est orientée essentiellement perpendiculairement au rebord d'appui (7) de la bride de support (20),
les nervures (11, 12, 26) du corps annulaire (10) et les nervures (21, 22, 28) de la bride de support (20) étant orientées les unes vers les autres dans l'état assemblé, et au moins l'une des nervures (11, 12, 26) du corps annulaire (10) s'engrenant au moins en partie avec au moins une nervure (21, 22, 28) de la bride de support (20) dans l'état assemblé,
**caractérisé en ce que**
- la paroi inclinée (6) présente au moins une nervure périphérique (11, 12, 26) et un profilage et se termine par une paroi intérieure cylindrique (8),
- les nervures (11, 12, 26) du corps annulaire (10) et les nervures (21, 22, 28) de la bride de support (20) étant connectées les unes aux autres par engagement par force dans l'état assemblé,
- au moins une nervure (11) du corps annulaire (10) ou (21) de la bride de support (20) étant segmentée au niveau de sa périphérie (19),
de telle sorte que lors de la compression des deux parties de l'élément de réception (100), la nervure segmentée (11), du fait d'une force de pression exercée par la nervure (21), cède quelque peu pour pouvoir presser contre une surface intérieure (14) de l'ouverture d'écoulement (5).

2. Module de plaque de sol de douche (1), comprenant une plaque de sol de douche préfabriquée (9) et un élément de réception (100) incorporé dans la plaque de sol de douche (9) selon la revendication 1.

3. Module de plaque de sol de douche (1) selon la revendication 2, **caractérisé en ce que**
- sur le côté plat plan ou concave (2 ; 3) de la plaque de sol de douche (9) dans la région de l'ouverture d'écoulement (5) est incorporé un évidement plat (31) de forme annulaire s'étendant dans le matériau d'un corps en mousse brute (30) de la plaque de sol de douche (9) ;
- le rebord d'appui (4) s'appuie contre le corps en mousse brute (30) dans la région de l'évidement plat (31) et est en affleurement avec le côté plat (2 ; 3) de la plaque de sol de douche (9).

4. Module de plaque de sol de douche (1) selon la revendication 2, **caractérisé en ce que** la nervure (11) du corps annulaire (10), dans l'état assemblé, est serrée entre la nervure (21) de la bride de support (20) et une surface interne (14) de l'ouverture d'écoulement (5) de la plaque de sol de douche (9).

5. Module de plaque de sol de douche (1) selon la revendication 2, **caractérisé en ce que** la nervure (11) du corps annulaire (10) et la nervure (21) de la bride de support (20), dans l'état assemblé, pressent en s'appliquant l'une sur l'autre toutes les deux contre une surface intérieure (14) de l'ouverture d'écoulement (5) de la plaque de sol de douche (9).

6. Module de plaque de sol de douche (1) selon l'une quelconque des revendications 2 à 5, **caractérisé en ce que** le rebord d'appui (4) est collé avec le corps en mousse brute (30) dans la région de l'évidement plat (31).

7. Module de plaque de sol de douche (1) selon la revendication 6, **caractérisé en ce que** le rebord d'appui (4) est connecté au corps en mousse brute (30) par le biais d'un double film adhésif (13) posé sous forme annulaire.
